(19) Europäisches Patentamt
European Patent Office
Office européen des brevets

(11) **EP 3 401 756 A1**

(12) **EUROPEAN PATENT APPLICATION**

(43) Date of publication:
**14.11.2018 Bulletin 2018/46**

(51) Int Cl.:
***G06F 1/32*** (2006.01)

(21) Application number: **17179039.7**

(22) Date of filing: **30.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.05.2017 US 201715591077**

(71) Applicant: **Synology Incorporated Taipei 103 (TW)**

(72) Inventor: **Zhuo, Yi-Lin 103 Taipei (TW)**

(74) Representative: **Becker Kurig Straus Patentanwälte Bavariastrasse 7 80336 München (DE)**

(54) **METHOD AND ASSOCIATED APPARATUS FOR PERFORMING DESTINATION POWER MANAGEMENT WITH AID OF SOURCE DATA STATISTICS IN STORAGE SYSTEM**

(57) A method and associated apparatus (100, 100-1, 100-2, 200, 200-1, 200-2) for performing destination power management with aid of source data statistics in a storage system (10, 10-1, 10-2) are provided. The method includes: monitoring an accumulated data size of source data in at least one target object of a file system of a main storage server (100, 100-1, 100-2) that have not been replicated and transmitted to a destination storage sub-system (200, 200-1, 200-2), where the destination storage sub-system (200, 200-1, 200-2) is positioned in the storage system (10, 10-1, 10-2) and positioned outside the main storage server (100, 100-1, 100-2), and the destination storage sub-system (200, 200-1, 200-2) is utilized for storing a replication version of the source data; and according to the accumulated data size, dynamically determining whether to turn on or turn off the destination storage sub-system (200, 200-1, 200-2), where generation of the replication version is performed after turning on the destination storage sub-system (200, 200-1, 200-2), and turning off the destination storage sub-system (200, 200-1, 200-2) is performed after the generation of the replication version.

FIG. 1

## Description

Field of the Invention

The present invention relates to a method and associated apparatus for performing destination power management with aid of source data statistics in a storage system according to the pre-characterizing clauses of claims 1,11, and 13.

Background of the Invention

According to the related art, when there is no replication schedule, a destination server for storing replication data (e.g. snapshot data) from a source server may need to keep staying in a power-on state to wait for connections from the source server, and the need of keeping staying in the power-on state may cause a problem of high power consumption of the destination server. When there is a replication schedule, although a destination server for storing replication data (e.g. snapshot data) from a source server may be notified of starting a replication operation, a time point of completion of the replication operation is typically unknown. As the time point of the completion of the replication operation is typically unknown, the destination server may need to keep staying in a power-on state to wait for a long period after the completion of the replication operation due to some trade-off designs, and the need of keeping staying in the power-on state to wait for the long period may cause a problem of schedule-dependent power consumption of the destination server. Thus, how to reduce power consumption of a storage system has become an important issue to be solved.

Summary of the Invention

This in mind, the present invention aims at providing a method and associated apparatus for performing destination power management with aid of source data statistics in a storage system, to solve the problems which exist in the related arts and/or enhance the overall performance of the storage system.

This is achieved by a method and associated apparatus for performing destination power management with aid of source data statistics in a storage system according to the pre-characterizing clauses of claims 1, 11, and 13. The dependent claims pertain to corresponding further developments and improvements.

In one aspect, the disclosure features a method for performing destination power management with aid of source data statistics in a storage system. The method may be applied to the storage system, and the storage system may include at least one server (e.g. one or more servers). The method may include: monitoring an accumulated data size of source data in at least one target object of a file system of a main storage server that have not been replicated and transmitted to a destination storage sub-system, wherein the at least one server includes the main storage server, the destination storage sub-system is positioned in the storage system and positioned outside the main storage server, and the destination storage sub-system is utilized for storing a replication version of the source data; and according to the accumulated data size, dynamically determining whether to turn on or turn off the destination storage sub-system, wherein generation of the replication version is performed after turning on the destination storage sub-system, and turning off the destination storage sub-system is performed after the generation of the replication version.

In one aspect, the disclosure features an apparatus for performing destination power management with aid of source data statistics in a storage system. The apparatus may be applied to the storage system, and the storage system may include at least one server (e.g. one or more servers). The apparatus may include a main storage server, and the at least one server may include the main storage server. For example, the main storage server may include a processing circuit arranged to control operations of the main storage server. In addition, the processing circuit may include a data-size counter and a replication controller that is coupled to the data-size counter. The data-size counter may be arranged to monitor an accumulated data size of source data in at least one target object of a file system of the main storage server that have not been replicated and transmitted to a destination storage sub-system. The destination storage sub-system is positioned in the storage system and positioned outside the main storage server, and the destination storage sub-system is utilized for storing a replication version of the source data. The replication controller may be arranged to perform replication control. According to the accumulated data size, the replication controller may be arranged to dynamically determine whether to turn on or turn off the destination storage sub-system. Additionally, generation of the replication version is performed after turning on the destination storage sub-system, and turning off the destination storage sub-system is performed after the generation of the replication version.

In one aspect, the disclosure features an apparatus for performing destination power management with aid of source data statistics in a storage system. The apparatus may be applied to the storage system, and the storage system may include at least one server (e.g. one or more servers). The apparatus may include a destination storage sub-system that is positioned in the storage system and positioned outside a main storage server, and the at least one server may include the main storage server. The main storage server may be arranged to monitor an accumulated data size of source data in at least one target object of a file system of the main storage server that have not been replicated and transmitted to the destination storage sub-system, and may be arranged to, according to the accumulated data size, dynamically determine whether to turn on or turn off the destination storage sub-system. In addition, the destination storage sub-system may include a power controller and a processing circuit that is coupled to the power controller. The power controller may be arranged to control power of the destination storage sub-system. When the main storage server determines to turn on the destination storage sub-system and correspondingly outputs a signal, the power controller may be arranged to turn on the power of the destination storage sub-system, to make the destination storage sub-system enter a power-on state. The processing circuit may be arranged to control operations of the destination storage sub-system. Under control of the processing circuit, the destination storage sub-system may be arranged to store a replication version of the source data. When the main storage server determines to turn off the destination storage sub-system and correspondingly outputs at least one other signal, the destination storage sub-system may be arranged to enter a power-off state. Additionally, generation of the replication version is performed after turning on the destination storage sub-system, and turning off the destination storage sub-system is performed after the generation of the replication version. Under control of the main storage server, the destination storage sub-system may be arranged to dynamically enter the power-on state or enter the power-off state in response to the accumulated data size.

The method and associated apparatus of the present invention may solve problems existing in the related arts without introducing unwanted side effects, or in a way that is less likely to introduce a side effect. In addition, the present invention method and apparatus can significantly enhance the overall performance of the storage system.

Brief Description of the Drawings

In the following, the invention is further illustrated by way of example, taking reference to the accompanying drawings. Thereof

FIG. 1 is a diagram of a storage system according to an embodiment of the present invention,
FIG. 2 illustrates a servers-type configuration of the storage system shown in FIG. 1 according to an embodiment of the present invention,
FIG. 3 illustrates an expansion-type configuration of the storage system shown in FIG. 1 according to an embodiment of the present invention,
FIG. 4 illustrates a flowchart of a method for performing destination power management with aid of source data statistics in a storage system according to an embodiment of the present invention,
FIG. 5 illustrates a control scheme of the method shown in FIG. 4 for controlling the storage system shown in FIG. 1 according to an embodiment of the present invention,
FIG. 6 illustrates a control scheme of the method shown in FIG. 4 for controlling the main storage server shown in FIG. 1 according to an embodiment of the present invention,
FIG. 7 illustrates a control scheme of the method shown in FIG. 4 for controlling the destination storage sub-system shown in FIG. 1 according to an embodiment of the present invention,
FIG. 8 illustrates a working flow of the method shown in FIG. 4 for controlling the main storage server shown in FIG. 1 according to an embodiment of the present invention,
FIG. 9 illustrates a working flow of the method shown in FIG. 4 for controlling the destination storage sub-system shown in FIG. 1 according to an embodiment of the present invention, and
FIG. 10 illustrates an example of power consumption of the destination storage sub-system shown in FIG. 1.

Detailed Description

Embodiments of the present invention provide a method for performing destination power management with aid of source data statistics in a storage system, and provide an apparatus for performing destination power management with aid of source data statistics in the storage system. The apparatus may include at least one portion (e.g. a portion or all) of the storage system. The storage system may operate according to the method to perform replication in a power-saving manner. A replication source device in the storage system may monitor a data size of data to be replicated to a replication destination device in the storage system, and may dynamically control the power-on and power-off phases of the replication destination device according to the data size. As a result, power consumption of the storage system (e.g. the replication destination device) can be greatly reduced.

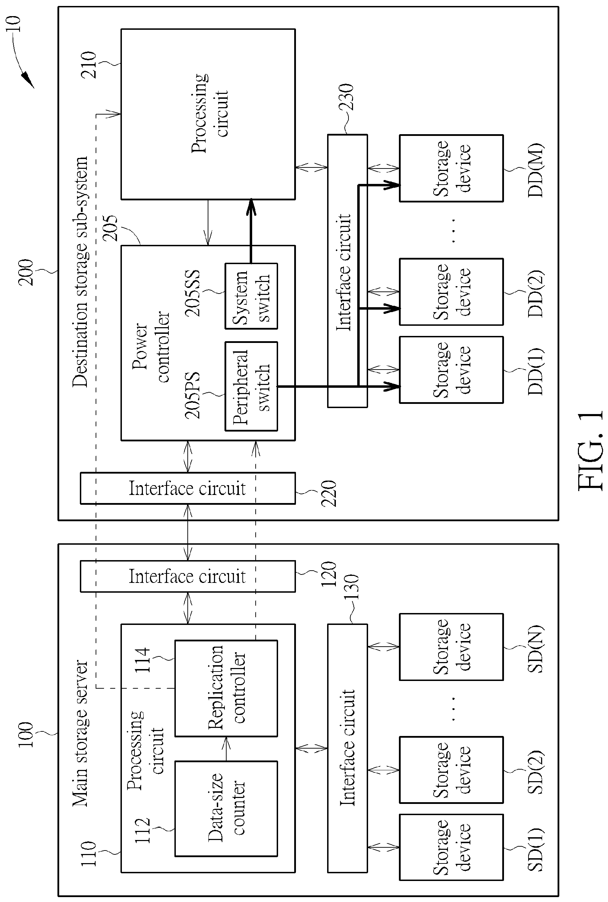

FIG. 1 is a diagram of a storage system 10 according to an embodiment of the present invention. The storage system 10 may include a main storage server 100 and a destination storage sub-system 200, which may be taken as examples of the replication source device and the replication destination device, respectively. The main storage server 100 may include a processing circuit 110, interface circuits 120 and 130, and N storage devices {SD(1), SD(2), ..., SD(N)} (e.g. the notation "N" may represent a positive integer), and the processing circuit 110 may include a data-size counter 112 and a replication controller 114 that may be coupled to each other. For example, at least one portion (e.g. a portion or all) of the processing circuit 110 may be implemented with at least one processor (e.g. one or more processors) running program modules and associated circuits (e.g. random access memory (RAM), chipset, etc.). The interface circuit 130 may be arranged for installing the storage devices {SD(1), SD(2), ..., SD(N)} at the main storage server 100. Examples of the storage devices {SD(1), SD(2), ..., SD(N)} may include, but are not limited to: Hard Disk Drives (HDDs) and Solid State Drives (SSDs). In addition, the destination storage sub-system 200 is positioned in the storage system 10 and positioned outside the main storage server 100. The destination storage sub-system 200 may include a power controller 205 and a processing circuit 210 that may be coupled to each other, and the power controller 205 may include a peripheral switch 205PS and a system switch 205SS. The destination storage sub-system 200 may further include interface circuits 220 and 230 and M storage devices {DD(1), DD(2), ..., DD(M)} (e.g. the notation "M" may represent a positive integer). The interface circuit 230 may be arranged for installing the storage devices {DD(1), DD(2), ..., DD(M)} at the destination storage sub-system 200. Examples of the storage devices {DD(1), DD(2), ..., DD(M)} may include, but are not limited to: HDDs and SSDs. Additionally, the interface circuit 220 may be coupled to the interface circuit 120 through one or more communications channels (e.g. one or more network connections, or one or more transmission cables), allowing the main storage server 100 and the destination storage sub-system 200 to communicate with each other through the interface circuits 120 and 220 and the one or more communications channels. Please note that the storage system 10 may be taken as an example of the storage system mentioned above, and the apparatus may include at least one portion (e.g. a portion or all) of the storage system 10. For example, the apparatus may include at least one portion (e.g. a portion or all) of the main storage server 100. In another example, the apparatus may include at least one portion (e.g. a portion or all) of the destination storage sub-system 200. In yet another example, the apparatus may include the whole system such as the storage system 10.

According to this embodiment, the storage system 10 may include at least one server (e.g. one or more servers) that may include the main storage server 100. The processing circuit 110 may be arranged to control operations of the main storage server 100. The main storage server 100 (more particularly, the processing circuit 110, e.g. the data-size counter 112 thereof) may be arranged to monitor an accumulated data size of source data in at least one target object (e.g. one or more target objects) of a file system of the main storage server 100 that have not been replicated and transmitted to the destination storage sub-system 200. Examples of the target object of the file system may include, but are not limited to: a file, a folder, and a directory. For better comprehension, the source data may be snapshot data, but the present invention is not limited thereto. In addition, the destination storage sub-system 200 may be utilized for storing a replication version of the source data. The main storage server 100 (more particularly, the processing circuit 110, e.g. the replication controller 114 thereof) may be arranged to perform replication control. According to the accumulated data size, the main storage server 100 (more particularly, the processing circuit 110, e.g. the replication controller 114 thereof) may be arranged to dynamically determine whether to turn on or turn off the destination storage sub-system 200. As the main storage server 100 (e.g. the processing circuit 110) may accumulate the source data before the source data are replicated and transmitted to the destination storage sub-system 200, the accumulated data size may increase with respect to time, starting from zero. When the accumulated data size of the source data reaches a predetermined data-size threshold, the main storage server 100 (e.g. the processing circuit 110) may turn on the destination storage sub-system 200 and may trigger a replication operation to replicate and transmit the source data to the destination storage sub-system 200. Thus, after the destination storage sub-system 200 is turned on, the destination storage sub-system 200 may generate the replication version. For example, when the source data are replicated and transmitted to the destination storage sub-system 200, the destination storage sub-system 200 may generate the replication version, and more particularly, may store the replication version in at least one storage device of the storage devices {DD(1), DD(2), ..., DD(M)}. Afterward, the main storage server 100 (more particularly, the processing circuit 110, e.g. the replication controller 114 thereof) may turn off the destination storage sub-system 200, in which the destination storage sub-system 200 does not need to wait for a long period such as that of the related art after completion of the replication operation. The above operations may be repeated for the latest source data, such as new source data (e.g. new snapshot data) that have not been replicated and transmitted to the destination storage sub-system 200 after the latest completed replication operation. Similarly, as the main storage server 100 (e.g. the processing circuit 110) may accumulate the new source data before the new source data are replicated and transmitted to the destination storage sub-system 200, the accumulated data size of the new source data may increase with respect to time, starting from zero.

As shown in the right half of FIG. 1, the arrows illustrated with bold lines from the switches within the power controller 205 (e.g. the peripheral switch 205PS and the system switch 205SS) may indicate some associated power paths (e.g. the power paths from the peripheral switch 205PS toward the storage devices {DD(1), DD(2), ..., DD(M)}, and the power path from the system switch 205SS toward the processing circuit 210). The power controller 205 may be arranged to control power of the destination storage sub-system 200, in which the power may be selectively delivered through the power paths. When the main storage server 100 determines to turn on the destination storage sub-system 200 and correspondingly outputs a signal, the power controller 205 may be arranged to turn on the power of the destination storage sub-system 200, to make the destination storage sub-system 200 enter a power-on state (e.g. boot up, wake up, etc.). The processing circuit 210 may be arranged to control operations of the destination storage sub-system 200. For example, under control of the processing circuit 210, the destination storage sub-system 200 may be arranged to store the replication version of the source data. When the main storage server 100 determines to turn off the destination storage sub-system 200 and correspondingly outputs at least one other signal (e.g. one or more other signals) toward the destination storage sub-system 200, the destination storage sub-system 200 may be arranged to enter a power-off state (e.g. shut down, sleep, etc.). According to this embodiment, under control of the main storage server 100, the destination storage sub-system 200 may be arranged to dynamically enter the power-on state (e.g. boot up, wake up, etc.) or enter the power-off state (e.g. shut down, sleep, etc.) in response to the accumulated data size.

Some implementation details of the power controller 205 may be described as follows. The system switch 205SS may be arranged to control power of the processing circuit 210. When the main storage server 100 determines to turn on the destination storage sub-system 200 and correspondingly outputs the signal (e.g. a boot-up command, a wake-up command, etc.), the system switch 205SS may be arranged to turn on the power of the processing circuit 210, to make the destination storage sub-system 200 enter the power-on state (e.g. boot up, wake up, etc.). In addition, the peripheral switch 205PS may be arranged to control power of the storage devices {DD(1), DD(2), ..., DD(M)}. When the main storage server 100 determines to turn off the destination storage sub-system 200 and correspondingly outputs the aforementioned at least one other signal, the peripheral switch 205PS may be arranged to turn off the power of the storage devices {DD(1), DD(2), ..., DD(M)} and the system switch 205SS may be arranged to turn off the power of the processing circuit 210, to make the destination storage sub-system 200 enter the power-off state (e.g. shut down, sleep, etc.). For example, the aforementioned at least one other signal may include a storage device power-off command and a system power-off command (e.g. a shutdown command, a sleep command, etc.). The peripheral switch 205PS may be arranged to turn off the power of the storage devices {DD(1), DD(2), ..., DD(M)} in response to the storage device power-off command, and then the system switch 205SS may be arranged to turn off the power of the processing circuit 210 in response to the system power-off command.

According to some embodiments, the architecture of the storage system 10 may vary. For example, based on a servers-type configuration of the storage system 10, both of the main storage server 100 and the destination storage sub-system 200 may be servers, in which the main storage server 100 may be regard as a source storage server and the destination storage sub-system 200 may be regard as a destination storage server (e.g. a replication server or a backup server). Thus, the aforementioned at least one server may include multiple servers (e.g. the source storage server and the destination storage server). In another example, based on an expansion-type configuration of the storage system 10, the destination storage sub-system 200 may be an expansion storage device of the main storage server 100, such as an expansion storage module controlled by the main storage server 100.

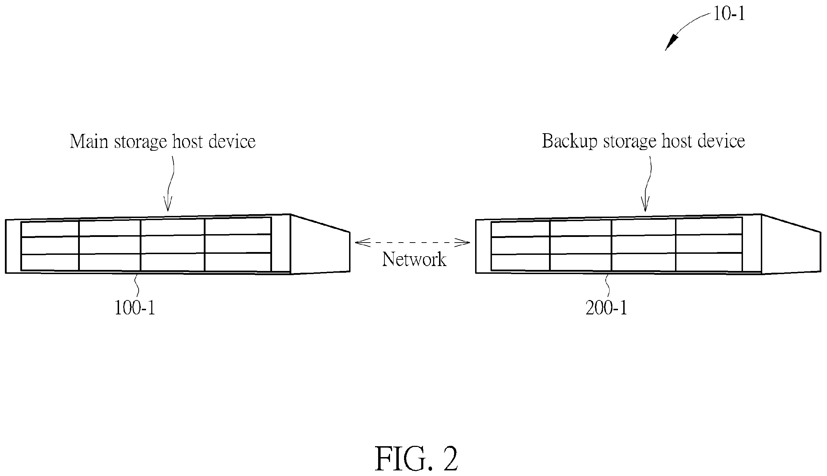

FIG. 2 illustrates the servers-type configuration of the storage system 10 shown in FIG. 1 according to an embodiment of the present invention. The storage system 10-1 of this embodiment may be taken as an example of the storage system 10, in which the main storage host device 100-1 may be taken as an example of the main storage server 100 and the backup storage host device 200-1 may be taken as an example of the destination storage sub-system 200. When the destination storage sub-system 200 is implemented as the backup storage host device 200-1, at least one portion (e.g. a portion or all) of the processing circuit 210 shown in FIG. 1 may be implemented with at least one processor (e.g. one or more processors) running program modules and associated circuits (e.g. RAM, chipset, etc.), but the present invention is not limited thereto. The main storage host device 100-1 and the backup storage host device 200-1 may communicate with each other through one or more network connections (labeled "Network" in FIG. 2, for brevity), and the main storage host device 100-1 may transmit replication data (e.g. snapshot data) and control commands through the one or more network connections. For example, the main storage host device 100-1 and the backup storage host device 200-1 may be implemented as Network Attached Storage (NAS) servers.

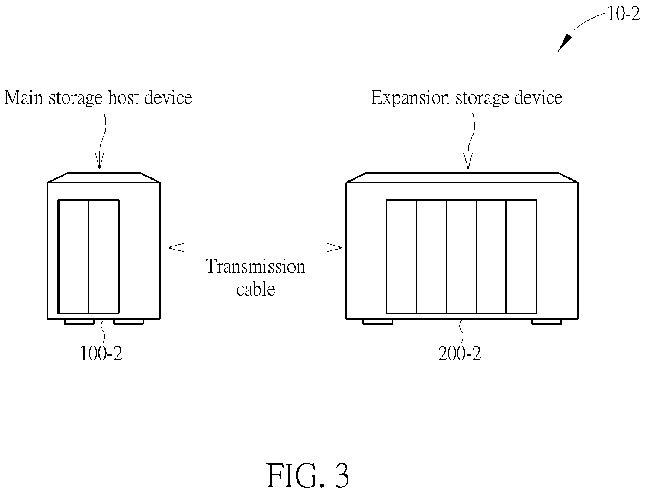

FIG. 3 illustrates the expansion-type configuration of the storage system 10 shown in FIG. 1 according to an embodiment of the present invention. The storage system 10-2 of this embodiment may be taken as an example of the storage system 10, in which the main storage host device 100-2 may be taken as an example of the main storage server 100 and the expansion storage device 200-2 may be taken as an example of the destination storage sub-system 200. When the destination storage sub-system 200 is implemented as the expansion storage device 200-2, at least one portion (e.g. a portion or all) of the processing circuit 210 shown in FIG. 1 may be implemented with a microcontroller, a micro controller unit (MCU), etc. and associated circuits, but the present invention is not limited thereto. The main storage host device 100-2 and the expansion storage device 200-2 may communicate with each other through a transmission cable, and the main storage host device 100-2 may control the expansion storage device 200-2 and transmit replication data (e.g. snapshot data) to the expansion storage device 200-2 through the transmission cable. For example, the interface circuit 120 of the main storage host device 100-2 and the interface circuit 220 of the expansion storage device 200-2 may comply with one or more communications specifications. Examples of the one or more communications specifications may include, but are not limited to: external Serial Advanced Technology Attachment (external SATA, or eSATA), Universal Serial Bus (USB), and Serial Attached Small Computer System Interface (Serial Attached SCSI, or SAS). According to some embodiments, when the transmission cable is an eSATA cable, the interface circuits 220 and 230 shown in FIG. 1 may be integrated into the same interface circuit.

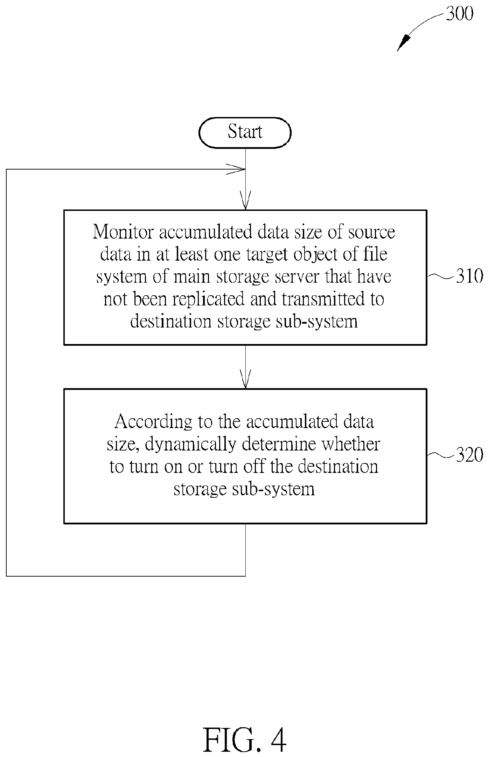

FIG. 4 illustrates a flowchart of a method 300 for performing destination power management with aid of source data statistics in a storage system according to an embodiment of the present invention, in which the method 300 may be taken as an example of the method mentioned above. The method 300 may be applied to the storage system 10, and may be applied to the main storage server 100 (e.g. the processing circuit 110 therein) and the destination storage sub-system 200 (e.g. the power controller 205 and the processing circuit 210 therein).

In Step 310, the processing circuit 110 (e.g. the data-size counter 112) may monitor the accumulated data size of the source data in the aforementioned at least one target object (e.g. a file, a folder, a directory, etc.) of the file system of the main storage server 100 that have not been replicated and transmitted to the destination storage sub-system 200. For example, the source data may be the snapshot data of the target object.

In Step 320, according to the accumulated data size, the processing circuit 110 (e.g. the replication controller 114) may dynamically determine whether to turn on or turn off the destination storage sub-system 200. For example, according to the accumulated data size, the processing circuit 110 (e.g. the replication controller 114) may dynamically determine whether to turn on or turn off the destination storage sub-system 200, to prevent periodically turning on the destination storage sub-system 200 and/or to make the destination storage sub-system 200 save power.

For example, the operations of Step 310 and Step 320 may be repeated for the latest source data, such as the new source data (e.g. the new snapshot data) that have not been replicated and transmitted to the destination storage sub-system 200 after the latest completed replication operation. Similarly, as the main storage server 100 (e.g. the processing circuit 110) may accumulate the new source data before the new source data are replicated and transmitted to the destination storage sub-system 200, the accumulated data size of the new source data may increase with respect to time, starting from zero. As a result, the present invention method (e.g. the method 200) and the associated apparatus (e.g. the aforementioned at least one portion of the storage system 10) may make the destination storage sub-system 200 save power, and may properly solve the related art problems without introducing unwanted side effects, or in a way that is less likely to introduce a side effect. For brevity, similar descriptions for this embodiment are not repeated in detail here.

According to some embodiments, the generation of the replication version is performed after turning on the destination storage sub-system 200, and turning off the destination storage sub-system 200 is performed after the generation of the replication version. When the source data are replicated and transmitted to the destination storage sub-system 200, the destination storage sub-system 200 may generate the replication version, and more particularly, may store the replication version in at least one storage device of the storage devices {DD(1), DD(2), ..., DD(M)}. In addition, the main storage server 100 (e.g. the processing circuit 110) may establish a connection between the main storage server 100 and the destination storage sub-system 200, in which the establishment of the connection and the generation of the replication version are performed immediately after turning on the destination storage sub-system 200. For example, after turning on the destination storage sub-system 200, the main storage server 100 (e.g. the processing circuit 110) may immediately start establishing the connection. When the establishment of the connection is successful, the main storage server 100 (e.g. the processing circuit 110) may immediately trigger the replication operation. After the replication version is generated, the main storage server 100 (e.g. the processing circuit 110) may immediately turn off the power of the storage devices {DD(1), DD(2), ..., DD(M)} and turn off the destination storage sub-system 200. As a result, the present invention method (e.g. the method 200) and the associated apparatus (e.g. the aforementioned at least one portion of the storage system 10) may make the destination storage sub-system 200 save power in an extreme manner.

According to some embodiments, after the replication version is generated, the main storage server 100 (e.g. the processing circuit 110) may immediately turn off the power of the storage devices {DD(1), DD(2), ..., DD(M)} to save power, no matter whether the destination storage sub-system 200 should be turned off or not.

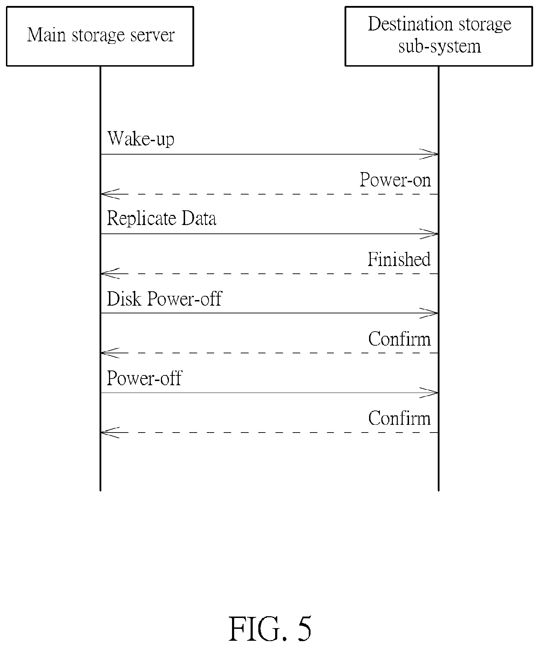

FIG. 5 illustrates a control scheme of the method 300 shown in FIG. 4 for controlling the storage system 10 shown in FIG. 1 according to an embodiment of the present invention. When the main storage server 100 (e.g. the processing circuit 110) determines to turn on the destination storage sub-system 200 and correspondingly outputs the signal such as the boot-up command, the wake-up command, etc. (labeled "Wake-up" in FIG. 5 to indicate one of the examples of this signal, for better comprehension) through the interface circuit 120, the power controller 205 may turn on the power of the destination storage sub-system 200 to make the destination storage sub-system 200 enter the power-on state (e.g. boot up, wake up, etc.). After the destination storage sub-system 200 is ready (e.g. completion of booting up, waking up, etc.), the destination storage sub-system 200 (e.g. the processing circuit 210) may send a power-on state signal (labeled "Power-on" in FIG. 5, for brevity) through the interface circuit 220 to notify the main storage server 100 of the power-on state of the destination storage sub-system 200. Afterward, the main storage server 100 (e.g.

the processing circuit 110) may replicate and transmit the source data to the destination storage sub-system 200 (labeled "Replicate Data" in FIG. 5, for brevity) through the interface circuit 120. After the completion of the replication operation, the destination storage sub-system 200 (e.g. the processing circuit 210) may send a finished state signal (labeled "Finished" in FIG. 5, for brevity) through the interface circuit 220 to notify the main storage server 100 of the completion (e.g. the finished state) of the replication operation. When detecting the completion of the replication operation, the main storage server 100 (e.g. the processing circuit 110) may immediately send the storage device power-off command such as a disk power-off command (labeled "Disk Power-off" in FIG. 5, for brevity) toward the destination storage sub-system 200 through the interface circuit 120. For example, the main storage server 100 (e.g. the processing circuit 110) may reset the accumulated data size to be zero at this moment (e.g. for further monitoring the new source data). In response to the storage device power-off command such as the disk power-off command, the peripheral switch 205PS may turn off the power of the storage devices {DD(1), DD(2), ..., DD(M)}, and then the power controller 205 may send a confirmation signal (labeled "Confirm" in FIG. 5, for brevity) toward the main storage server 100 through the interface circuit 220 to confirm that the power of the storage devices {DD(1), DD(2), ..., DD(M)} has been turned off. After receiving this confirmation signal, the main storage server 100 (e.g. the processing circuit 110) may immediately send the system power-off command (labeled "Power-off" in FIG. 5, for brevity) toward the destination storage sub-system 200 through the interface circuit 120. In response to the system power-off command, the system switch 205SS may turn off the power of the processing circuit 210 to make the destination storage sub-system 200 enter the power-off state, and then the power controller 205 may send another confirmation signal (labeled "Confirm" in FIG. 5, for brevity) toward the main storage server 100 through the interface circuit 220 to confirm that the destination storage sub-system 200 (e.g. the processing circuit 210) enters the power-off state.

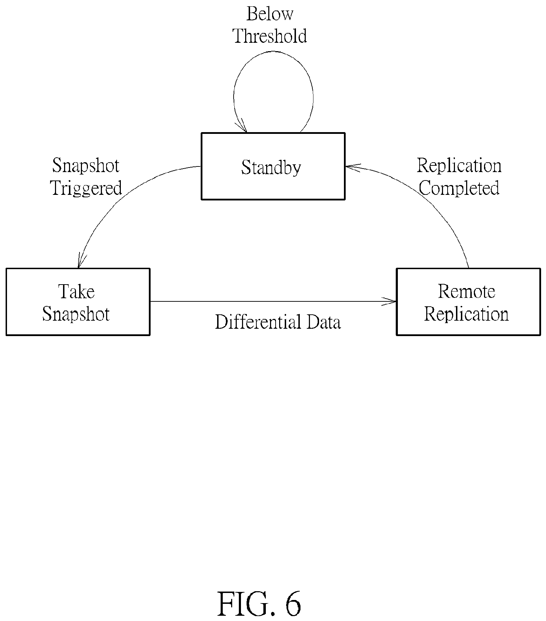

FIG. 6 illustrates a control scheme of the method 300 shown in FIG. 4 for controlling the main storage server 100 shown in FIG. 1 according to an embodiment of the present invention. In a standby state (labeled "Standby" in FIG. 6, for brevity) of the main storage server 100, the main storage server 100 (e.g. the processing circuit 110) may determine whether the accumulated data size reaches the predetermined data-size threshold. When the accumulated data size reaches the predetermined data-size threshold, the main storage server 100 (e.g. the processing circuit 110) may trigger the replication operation to replicate the source data such as the snapshot data (labeled "Snapshot Triggered" in FIG. 6 to indicate one of the examples of the trigger, for better comprehension); otherwise, when the accumulated data size is below the predetermined data-size threshold (labeled "Below Threshold" in FIG. 6, for brevity), the main storage server 100 may stay in the standby state. After exiting the standby state, the main storage server 100 (e.g. the processing circuit 110) may take the snapshot. In this embodiment, the snapshot data may be the differential data such as the data differences (or data changes) of the target object mentioned in Step 310 since the previous replication operation. For example, when the processing circuit 110 (e.g. the processor) is running an operating system (OS) such as a Unix-like OS, the processing circuit 110 may obtain associated metadata regarding the differential data from the file system. During or after transmitting the source data (e.g. the snapshot data, which may be the differential data in this embodiment) to the destination storage sub-system 200, the main storage server 100 (e.g. the processing circuit 110) may allow remote replication and wait for the completion of the replication operation. In the remote replication, the destination storage sub-system 200 may receive and write the replication version of the source data into the aforementioned at least one storage device of the storage devices {DD(1), DD(2), ..., DD(M)}. When the destination storage sub-system 200 notify the main storage server 100 of the completion of the replication operation (labeled "Replication Completed" in FIG. 6, for brevity), the main storage server 100 may enter the standby state.

According to some embodiments, the source data in the target object mentioned in Step 310 may be stored as a single file. As a result, the accumulated data size mentioned in Step 310 may be equal to the file size of this single file. According to some embodiments, the main storage server 100 (e.g. the processing circuit 110) may dynamically adjust the predetermined data-size threshold according to the network bandwidth (e.g. the latest bandwidth of the network), the data importance (e.g. the level of importance of the target object mentioned in Step 310), and/or the data type of an upper-layer service in the main storage server 100. For example, the processing circuit 110 may decrease the predetermined data-size threshold when the network bandwidth decreases, or may increase the predetermined data-size threshold when the network bandwidth increases. In another example, the processing circuit 110 may decrease the predetermined data-size threshold when the data importance of the target object mentioned in Step 310 is directed to a higher level within a plurality of predetermined levels of importance, or may increase the predetermined data-size threshold when the data importance of the target object mentioned in Step 310 is directed to a lower level within the plurality of predetermined levels of importance. In yet another example, the processing circuit 110 may decrease the predetermined data-size threshold when the upper-layer service is a time-sensitive service (e.g. an on-line transaction service), or may increase the predetermined data-size threshold when the upper-layer service is a time-insensitive service (e.g. a download service, such as that for downloading movies, songs, etc., in which the data type of the upper-layer service may be multimedia).

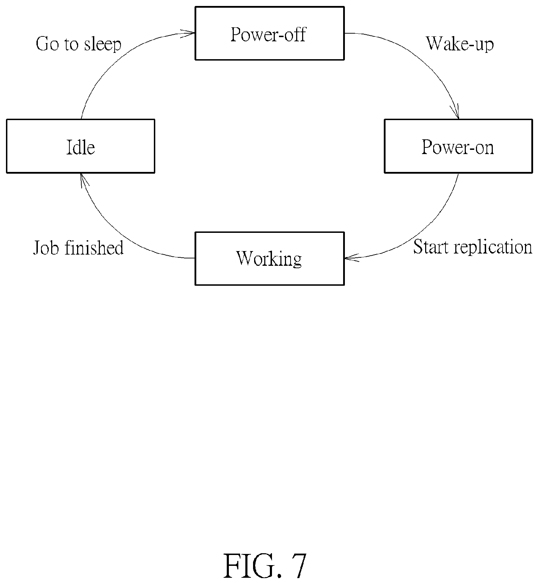

FIG. 7 illustrates a control scheme of the method 300 shown in FIG. 4 for controlling the destination storage sub-system 200 shown in FIG. 1 according to an embodiment of the present invention. The destination storage sub-system 200 (e.g. the processing circuit 210) may transit from the power-off state (labeled "Power-off" in FIG. 7, for brevity) to the power-on state (labeled "Power-on" in FIG. 7, for brevity) in response to the signal such as the boot-up command, the wake-up command, etc. (labeled "Wake-up" in FIG. 7 to indicate one of the examples of entering the power-on state in response to this signal, for better comprehension), and then may start replication upon trigger of the main storage server 100 and enter the working state thereof (labeled "Working" in FIG. 7, for brevity). When a job such as that of the replication operation is finished, the destination storage sub-system 200 (e.g. the processing circuit 210) may enter the idle state (labeled "Idle" in FIG. 7, for brevity). For example, in response to the storage device power-off command (e.g. the disk power-off command), the peripheral switch 205PS may turn off the power of the storage devices {DD(1), DD(2), ..., DD(M)} first. In response to the system power-off command such as the shutdown command, the sleep command, etc., the system switch 205SS may turn off the power of the processing circuit 210 to make the destination storage sub-system 200 (e.g. the processing circuit 210) enter the power-off state (e.g. shut down, sleep, etc.), in which "Go to sleep" is labeled in FIG. 7 to indicate one of the examples of entering the power-off state, for better comprehension.

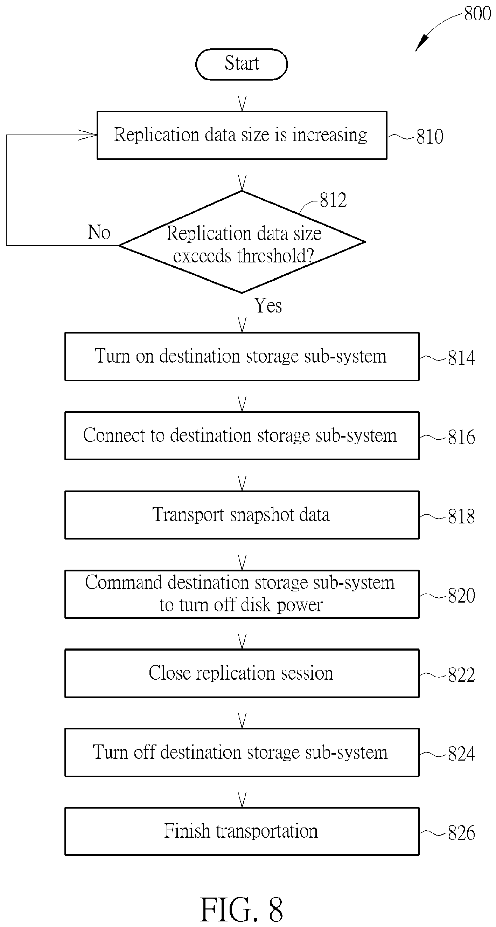

FIG. 8 illustrates a working flow 800 of the method 300 shown in FIG. 4 for controlling the main storage server 100 shown in FIG. 1 according to an embodiment of the present invention.

In Step 810, the processing circuit 110 (e.g. the data-size counter 112) may detect that the replication data size (e.g. the data size of the replication data, such as that of the source data) is increasing. The replication data size may be taken as an example of the accumulated data size mentioned in Step 310.

In Step 812, the processing circuit 110 (e.g. the replication controller 114) may check whether the replication data size exceeds a threshold. For example, this threshold may be equal to the predetermined data-size threshold. In some examples, this threshold may be one of any other values. When the replication data size exceeds the threshold, Step 814 is entered; otherwise, Step 810 is entered.

In Step 814, the processing circuit 110 (e.g. the replication controller 114) may turn on the destination storage sub-system 200. For example, the processing circuit 110 (e.g. the replication controller 114) may send the signal such as the boot-up command, the wake-up command, etc. to the destination storage sub-system 200 through the interface circuit 120, to make the destination storage sub-system 200 enter the power-on state.

In Step 816, under control of the processing circuit 110, the main storage server 100 may connect to the destination storage sub-system 200. For example, under control of the processing circuit 110, the main storage server 100 may establish a connection between the main storage server 100 and the destination storage sub-system 200.

In Step 818, under control of the processing circuit 110, the main storage server 100 may transport the snapshot data. For example, the main storage server 100 may transmit the source data (e.g. the snapshot data) to the destination storage sub-system 200.

In Step 820, under control of the processing circuit 110, the main storage server 100 may command the destination storage sub-system 200 to turn off disk power. For example, the processing circuit 110 may send the storage device power-off command (e.g. the disk power-off command) to the destination storage sub-system 200 through the interface circuit 120.

In Step 822, under control of the processing circuit 110, the main storage server 100 may close the replication session (e.g. the session of the replication operation).

In Step 824, the processing circuit 110 (e.g. the replication controller 114) may turn off the destination storage sub-system 200. For example, the processing circuit 110 (e.g. the replication controller 114) may send the system power off command such as the shutdown command, the sleep command, etc. to the destination storage sub-system 200 through the interface circuit 120, to make the destination storage sub-system 200 enter the power-off state.

In Step 826, under control of the processing circuit 110, the main storage server 100 may finish transportation (e.g. interactions related to the transportation procedure for this replication operation).

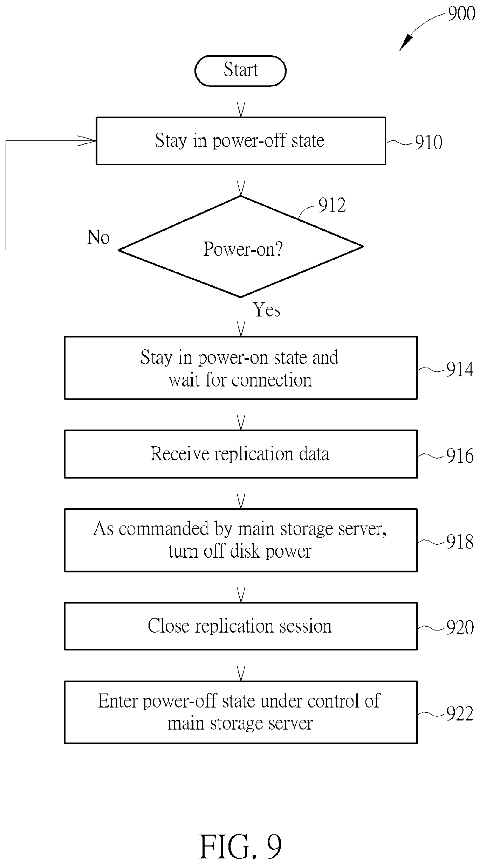

FIG. 9 illustrates a working flow 900 of the method 300 shown in FIG. 4 for controlling the destination storage sub-system 200 shown in FIG. 1 according to an embodiment of the present invention.

In Step 910, the destination storage sub-system 200 may stay in the power-off state.

In Step 912, the power controller 205 may check whether the destination storage sub-system 200 should enter the power-on state (labeled "Power-on?" in FIG. 9, for brevity). When the power controller 205 determines that the destination storage sub-system 200 should enter the power-on state (e.g. the power controller 205 detects that the signal such as the boot-up command, the wake-up command, etc. is received), Step 914 is entered; otherwise, Step 910 is entered.

In Step 914, the destination storage sub-system 200 may stay in the power-on state and wait for connection(s). For example, the destination storage sub-system 200 may wait for a request regarding establishing a connection between the main storage server 100 and the destination storage sub-system 200. As a result, the connection may be established.

In Step 916, the destination storage sub-system 200 may receive the replication data. For example, under control of the processing circuit 210, the destination storage sub-system 200 may receive the source data (e.g. the snapshot data) from the main storage server 100 and write the replication version of the source data into the aforementioned at least one storage device of the storage devices {DD(1), DD(2), ..., DD(M)}. The source data may be taken as an example of the replication data.

In Step 918, as commanded by the main storage server 100, the power controller 205 may turn off disk power. For example, the power controller 205 (e.g. the peripheral switch 205PS) may turn off the power of the storage devices {DD(1), DD(2), ..., DD(M)} in response to the storage device power-off command.

In Step 920, the destination storage sub-system 200 (e.g. the processing circuit 210) may close the replication session (e.g. the session of the replication operation).

In Step 922, the destination storage sub-system 200 may enter the power-off state under control of the main storage server 100. For example, the system switch 205SS may turn off the power of the processing circuit 210 in response to the system power-off command from the main storage server 100.

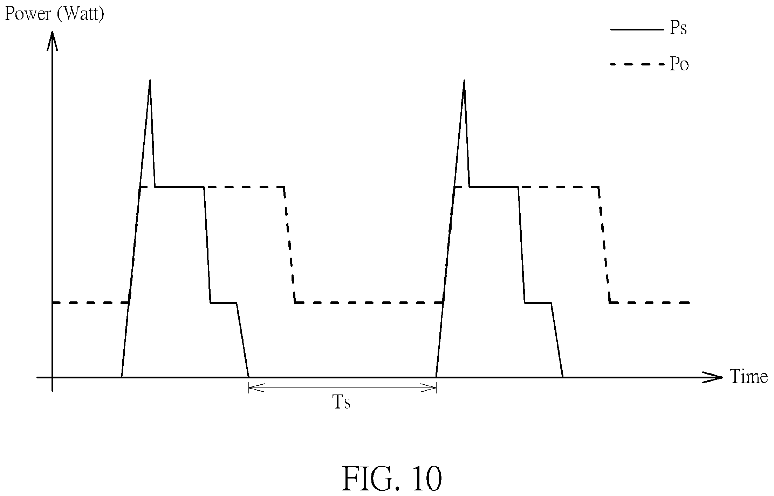

FIG. 10 illustrates an example of power consumption of the destination storage sub-system 200 shown in FIG. 1. The horizontal axis may represent time and the vertical axis may represent power (e.g. in unit of Watt). The curve of the power Ps (or power consumption) of the destination storage sub-system 200 may have a narrow peak when the destination storage sub-system 200 just enters the power-on state, may stay at a higher level before the peripheral switch 205PS turns off the power of the storage devices {DD(1), DD(2), ..., DD(M)}, may stay at a lower level for a short time interval after the peripheral switch 205PS turns off the power of the storage devices {DD(1), DD(2), ..., DD(M)}, and may reach (or approach) zero when the destination storage sub-system 200 enters the power-off state. As whether to turn on or turn off the destination storage sub-system 200 may be dynamically determined according to the accumulated data size (more particularly, according to whether the accumulated data size reaches the predetermined data-size threshold) in Step 320, the power-off time period Ts between two adjacent replication operations is not a fixed time period, in which the power-off time period Ts does not depend upon a replication schedule such as that mentioned above. According to this embodiment, the power-off time period Ts may be any of a shutdown time period, a sleep time period, etc., which may correspond to different examples of entering the power-off time in response to the system power-off command such as the shutdown command, the sleep command, etc., respectively.

For better comprehension, the curve of the power Po (or power consumption) of a destination server of the related art may be illustrated to have the same higher level when the power of the storage devices thereof is turned on (e.g. suppose that the destination storage sub-system 200 and the destination server of the related art have the same number (and type) of storage devices), to have the same lower level when the power of the storage devices thereof is turned off (e.g. suppose that the destination storage sub-system 200 and the destination server of the related art have the same basic power consumption), and to hypothetically align to the curve of the power Ps along the horizontal axis for a purpose of comparing the power Ps with the power Po, in which the power difference ΔP between the power Ps and the power Po may be expressed with the following equation:

$$\Delta P = P_S - P_O;$$

As the curve of the power Po does not reach (or approach) zero, and as the curve of the power Po keeps staying at the higher level for a long period such as that mentioned above after the time point of completion of a replication operation, it is sure that the power difference ΔP should be negative.

The present invention method (e.g. the method 200) and the associated apparatus (e.g. the aforementioned at least one portion of the storage system 10) may solve problems existing in the related arts without introducing unwanted side effects, or in a way that is less likely to introduce a side effect. Although simply decreasing the frequency of performing replication operations (e.g. the schedule-dependent power consumption and the frequency of performing replication operations may have a positive correlation) or simply decreasing the length of the long period while omitting the trade-off designs may be helpful on reducing the power consumption, doing so may cause some problems such as some side effects (e.g. replication failure, invalid restore points, etc.). The present invention method and apparatus can achieve the goal of saving power without introducing these problems. As a result, the present invention method and apparatus can significantly enhance the overall performance of the storage system.

In the above descriptions and in the claims, the terms "include" and "comprise" are used in an open-ended fashion, and thus should be interpreted to mean "include, but not limited to ...".

All combinations and sub-combinations of above-described features also belong to the invention.

## Claims

1. A method for performing destination power management with aid of source data statistics in a storage system (10, 10-1, 10-2), the method being applied to the storage system (10, 10-1, 10-2), the storage system (10, 10-1, 10-2) comprising at least one server (100, 100-1, 100-2, 200, 200-1), **characterized**

**in that** the method comprises:

> monitoring an accumulated data size of source data in at least one target object of a file system of a main storage server (100, 100-1, 100-2) that have not been replicated and transmitted to a destination storage sub-system (200, 200-1, 200-2), wherein the at least one server (100, 100-1, 100-2, 200, 200-1) comprises the main storage server (100, 100-1, 100-2), the destination storage sub-system (200, 200-1, 200-2) is positioned in the storage system (10, 10-1, 10-2) and positioned outside the main storage server (100, 100-1, 100-2), and the destination storage sub-system (200, 200-1, 200-2) is utilized for storing a replication version of the source data; and
> according to the accumulated data size, dynamically determining whether to turn on or turn off the destination storage sub-system (200, 200-1, 200-2), wherein generation of the replication version is performed after turning on the destination storage sub-system (200, 200-1, 200-2), and turning off the destination storage sub-system (200, 200-1, 200-2) is performed after the generation of the replication version.

2. The method of claim 1, **characterized in that** when the source data are replicated and transmitted to the destination storage sub-system (200, 200-1, 200-2), the destination storage sub-system (200, 200-1, 200-2) generates the replication version.

3. The method of claim 1, **characterized in that** the destination storage sub-system (200, 200-1, 200-2) comprises at least one interface circuit (230), and the at least one interface circuit (230) is utilized for installing a plurality of storage devices ({DD(1), DD(2), ..., DD(M)}) at the destination storage sub-system (200, 200-1, 200-2); and when the source data are replicated and transmitted to the destination storage sub-system (200, 200-1, 200-2), the destination storage sub-system (200, 200-1, 200-2) stores the replication version in at least one storage device of the plurality of storage devices ({DD(1), DD(2), ..., DD(M)}).

4. The method of claim 1, **characterized in that** the step of dynamically determining whether to turn on or turn off the destination storage sub-system (200, 200-1, 200-2) further comprises:

> according to the accumulated data size, dynamically determining whether to turn on or turn off the destination storage sub-system (200, 200-1, 200-2), to prevent periodically turning on the destination storage sub-system (200, 200-1, 200-2).

5. The method of claim 1, **characterized in that** the step of dynamically determining whether to turn on or turn off the destination storage sub-system (200, 200-1, 200-2) further comprises:

> according to the accumulated data size, dynamically determining whether to turn on or turn off the destination storage sub-system (200, 200-1, 200-2), to make the destination storage sub-system (200, 200-1, 200-2) save power.

6. The method of claim 1, **characterized in that** the method further comprises:

> establishing a connection between the main storage server (100, 100-1, 100-2) and the destination storage sub-system (200, 200-1, 200-2), wherein the establishment of the connection and the generation of the replication version are performed immediately after turning on the destination storage sub-system (200, 200-1, 200-2).

7. The method of claim 6, **characterized in that** the destination storage sub-system (200, 200-1, 200-2) comprises at least one interface circuit (230), and the at least one interface circuit (230) is utilized for installing a plurality of storage devices ({DD(1), DD(2), ..., DD(M)}) at the destination storage sub-system (200, 200-1, 200-2); and the method further comprises:

> after the replication version is generated, immediately turning off power of the plurality of storage devices ({DD(1), DD(2), ..., DD(M)}) and turning off the destination storage sub-system (200, 200-1, 200-2).

8. The method of claim 1, **characterized in that** the destination storage sub-system (200, 200-1, 200-2) comprises at least one interface circuit (230), and the at least one interface circuit (230) is utilized for installing a plurality of storage devices ({DD(1), DD(2), ..., DD(M)}) at the destination storage sub-system (200, 200-1, 200-2); and the method further comprises:

> after the replication version is generated, immediately turning off power of the plurality of storage devices ({DD(1), DD(2), ..., DD(M)}).

9. The method of claim 1, **characterized in that** the at least one server (100, 100-1, 100-2, 200, 200-1) comprises multiple servers ({100, 200}, {100-1, 200-1}); and the destination storage sub-system (200, 200-1) is a server of the servers ({100, 200}, {100-1, 200-1}), and is a storage server (200, 200-1).

10. The method of claim 1, **characterized in that** the destination storage sub-system (200, 200-2) is an expansion storage device (200, 200-2) of the main storage server (100, 100-2).

11. An apparatus (100, 100-1, 100-2) for performing destination power management with aid of source data statistics in a storage system (10, 10-1, 10-2), the apparatus (100, 100-1, 100-2) being applied to the storage system (10, 10-1, 10-2), the storage system (10, 10-1, 10-2) comprising at least one server (100, 100-1, 100-2, 200, 200-1), **characterized in that** the apparatus comprises:

a main storage server (100, 100-1, 100-2), wherein the at least one server (100, 100-1, 100-2, 200, 200-1) comprises the main storage server (100, 100-1, 100-2), and the main storage server (100, 100-1, 100-2) comprises:

a processing circuit (110), arranged to control operations of the main storage server (100, 100-1, 100-2), wherein the processing circuit (110) comprises:

a data-size counter (112), arranged to monitor an accumulated data size of source data in at least one target object of a file system of the main storage server (100, 100-1, 100-2) that have not been replicated and transmitted to a destination storage sub-system (200, 200-1, 200-2), wherein the destination storage sub-system (200, 200-1, 200-2) is positioned in the storage system (10, 10-1, 10-2) and positioned outside the main storage server (100, 100-1, 100-2), and the destination storage sub-system (200, 200-1, 200-2) is utilized for storing a replication version of the source data; and
a replication controller (114), coupled to the data-size counter (112), arranged to perform replication control, wherein according to the accumulated data size, the replication controller (114) is arranged to dynamically determine whether to turn on or turn off the destination storage sub-system (200, 200-1, 200-2), wherein generation of the replication version is performed after turning on the destination storage sub-system (200, 200-1, 200-2), and turning off the destination storage sub-system (200, 200-1, 200-2) is performed after the generation of the replication version.

12. The apparatus of claim 11, **characterized in that** according to the accumulated data size, the main storage server (100, 100-1, 100-2) is arranged to dynamically determine whether to turn on or turn off the destination storage sub-system (200, 200-1, 200-2), to make the destination storage sub-system (200, 200-1, 200-2) save power.

13. An apparatus (200, 200-1, 200-2) for performing destination power management with aid of source data statistics in a storage system (10, 10-1, 10-2), the apparatus (200, 200-1, 200-2) being applied to the storage system (10, 10-1, 10-2), the storage system (10, 10-1, 10-2) comprising at least one server (100, 100-1, 100-2, 200, 200-1), **characterized in that** the apparatus (200, 200-1, 200-2) comprises:

a destination storage sub-system (200, 200-1, 200-2), positioned in the storage system (10, 10-1, 10-2) and positioned outside a main storage server (100, 100-1, 100-2), wherein the at least one server (100, 100-1, 100-2, 200, 200-1) comprises the main storage server (100, 100-1, 100-2), the main storage server (100, 100-1, 100-2) is arranged to monitor an accumulated data size of source data in at least one target object of a file system of the main storage server (100, 100-1, 100-2) that have not been replicated and transmitted to the destination storage sub-system (200, 200-1, 200-2), and is arranged to, according to the accumulated data size, dynamically determine whether to turn on or turn off the destination storage sub-system (200, 200-1, 200-2), and the destination storage sub-system (200, 200-1, 200-2) comprises:

a power controller (205), arranged to control power of the destination storage sub-system (200, 200-1, 200-2), wherein when the main storage server (100, 100-1, 100-2) determines to turn on the destination storage sub-system (200, 200-1, 200-2) and correspondingly outputs a signal, the power controller (205) is arranged to turn on the power of the destination storage sub-system (200, 200-1, 200-2), to make the destination storage sub-system (200, 200-1, 200-2) enter a power-on state; and
a processing circuit (210), coupled to the power controller (205), arranged to control operations of the destination storage sub-system (200, 200-1, 200-2), wherein under control of the processing circuit (210), the destination storage sub-system (200, 200-1, 200-2) is arranged to store a replication version of the source data;
wherein when the main storage server (100, 100-1, 100-2) determines to turn off the destination storage sub-system (200, 200-1, 200-2) and correspondingly outputs at least one other signal, the destination storage sub-system (200, 200-1, 200-2) is arranged to enter a power-off state;

wherein generation of the replication version is performed after turning on the destination storage sub-system (200, 200-1, 200-2), and turning off the destination storage sub-system (200, 200-1, 200-2) is performed after the generation of the replication version; and under control of the main storage server (100, 100-1, 100-2), the destination storage sub-system (200, 200-1, 200-2) is arranged to dynamically enter the power-on state or enter the power-off state in response to the accumulated data size.

**14.** The apparatus of claim 13, **characterized in that** the power controller (205) comprises:

a system switch (205SS), arranged to control power of the processing circuit (210), wherein when the main storage server (100, 100-1, 100-2) determines to turn on the destination storage sub-system (200, 200-1, 200-2) and correspondingly outputs the signal, the system switch is arranged to turn on the power of the processing circuit, to make the destination storage sub-system (200, 200-1, 200-2) enter the power-on state; and a peripheral switch (205PS), arranged to control power of a plurality of storage devices ({DD(1), DD(2), ..., DD(M)}) in the destination storage sub-system (200, 200-1, 200-2), wherein when the main storage server (100, 100-1, 100-2) determines to turn off the destination storage sub-system (200, 200-1, 200-2) and correspondingly outputs the at least one other signal, the peripheral switch (205PS) is arranged to turn off the power of the plurality of storage devices ({DD(1), DD(2), ..., DD(M)}) and the system switch (205SS) is arranged to turn off the power of the processing circuit (210), to make the destination storage sub-system (200, 200-1, 200-2) enter the power-off state.

**15.** The apparatus of claim 14, **characterized in that** the at least one other signal comprises a storage device power-off command and a system power-off command; and the peripheral switch (205PS) is arranged to turn off the power of the plurality of storage devices ({DD(1), DD(2), ..., DD(M)}) in response to the storage device power-off command, and then the system switch (205SS) is arranged to turn off the power of the processing circuit (210) in response to the system power-off command.

FIG. 1

10-1

Main storage host device

Backup storage host device

Network

100-1

200-1

# FIG. 2

10-2

Main storage host device

Expansion storage device

Transmission
cable

100-2

200-2

FIG. 3

300

Start

Monitor accumulated data size of source
data in at least one target object of file
system of main storage server that have
not been replicated and transmitted to
destination storage sub-system

~310

According to the accumulated data
size, dynamically determine whether
to turn on or turn off the destination
storage sub-system

~320

FIG. 4

FIG. 5

FIG. 6

Power-off

Go to sleep

Wake-up

Idle

Power-on

Job finished

Working

Start replication

FIG. 7

800

Start

Replication data size is increasing — 810

812

Replication data size
exceeds threshold?

No

Yes

Turn on destination storage sub-system — 814

Connect to destination storage sub-system — 816

Transport snapshot data — 818

Command destination storage sub-system
to turn off disk power — 820

Close replication session — 822

Turn off destination storage sub-system — 824

Finish transportation — 826

FIG. 8

900

Start

Stay in power-off state — 910

Power-on? — 912

No

Yes

Stay in power-on state and
wait for connection — 914

Receive replication data — 916

As commanded by main storage server,
turn off disk power — 918

Close replication session — 920

Enter power-off state under control of
main storage server — 922

FIG. 9

FIG. 10

EP 3 401 756 A1

Europäisches
Patentamt

European
Patent Office

Office européen
des brevets

# EUROPEAN SEARCH REPORT

**Application Number**

EP 17 17 9039

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/196085 A1 (MINAMIURA KIYOTO [JP]) 7 July 2016 (2016-07-07) * paragraph [0054] - paragraph [0096]; figures 2-5 * | 1-15 | INV. G06F1/32 |
| A | US 2004/015731 A1 (CHU FRANK R [US] ET AL) 22 January 2004 (2004-01-22) * paragraph [0029] - paragraph [0044]; figures 2-5 * | 1-15 | |
| A | US 2015/127967 A1 (DUTTON JAMES E [US] ET AL) 7 May 2015 (2015-05-07) * paragraph [0018] - paragraph [0053]; figures 1-3 * | 1-15 | |

TECHNICAL FIELDS SEARCHED (IPC)

G06F

The present search report has been drawn up for all claims

| Place of search | Date of completion of the search | Examiner |
|---|---|---|
| Munich | 10 January 2018 | Alonso Nogueiro, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 9039

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2018

| Patent document cited in search report | | | Publication date | Patent family member(s) | | | Publication date |
|---|---|---|---|---|---|---|---|
| US 2016196085 | A1 | | 07-07-2016 | JP<br>US | 2016126561<br>2016196085 | A<br>A1 | 11-07-2016<br>07-07-2016 |
| US 2004015731 | A1 | | 22-01-2004 | NONE | | | |
| US 2015127967 | A1 | | 07-05-2015 | AU<br>CA<br>CN<br>CN<br>EP<br>JP<br>JP<br>JP<br>JP<br>US<br>US<br>US<br>US<br>WO | 2010276389<br>2768709<br>102549524<br>104750434<br>2457140<br>5577404<br>5961218<br>2012533832<br>2014194803<br>2011040568<br>2012278549<br>2014013134<br>2015127967<br>2011011336 | A1<br>A1<br>A<br>A<br>A2<br>B2<br>B2<br>A<br>A<br>A1<br>A1<br>A1<br>A1<br>A2 | 16-02-2012<br>27-01-2011<br>04-07-2012<br>01-07-2015<br>30-05-2012<br>20-08-2014<br>02-08-2016<br>27-12-2012<br>09-10-2014<br>17-02-2011<br>01-11-2012<br>09-01-2014<br>07-05-2015<br>27-01-2011 |

EPO FORM P0459

For more details about this annex : see Official Journal of the European Patent Office, No. 12/82